# EUROPEAN PATENT APPLICATION

(11) **EP 4 718 787 A1**
(43) Date of publication of application: **01.04.2026**
(21) Application number: 25200467.6
(22) Date of filing: 05.09.2025
(51) Int. Cl.: H04L 12/46, G05B 19/418, H04L 69/08, H04L 12/66

(54) **VIRTUAL NETWORK GATEWAY**

(30) Priority: 27.09.2024 US 202418899193
(71) Applicant: Honeywell International Inc., Charlotte, NC 28202 (US)
(72) Inventor: LORDI, Angela Lee, Charlotte, 28202 (US); HARIDAS, Harshal S., Charlotte, 28202 (US); STRILICH, James, Charlotte, 28202 (US); MCLAUGHLIN, Paul F., Charlotte, 28202 (US); SANDERSON, Stuart, Charlotte, 28202 (US)
(74) Representative: Haseltine Lake Kempner LLP

(57) **Abstract**

A gateway system and method for use in an industrial process control system. The control system has a first network that uses a first communication protocol and at least one second network using a second communication protocol. A network interface is coupled to the second network and to a local area network coupled to the first network. A gateway converts supervisory control and data received on the first network from the controller in the first communication protocol to the second communication protocol and couples the converted supervisory control and data over the local area network to the network interface and the second network. The gateway converts information and data received in the second communication protocol on the local area network from the network interface and the second network to the first communication protocol coupling the converted data and information to the first network.

## Description

### FIELD

The field is related to industrial process control systems. The field may particularly relate to a virtualized network gateway for an industrial process control system.

### BACKGROUND

Process plants used in chemical, petroleum, or other processes, typically are controlled by process control systems that include at least one centralized process controller communicatively coupled to one or more field devices via analog and/or digital buses or other communication links. The field devices, which may be, for example, valves, valve positioners, switches, transmitters (e.g., temperature, pressure, and flow rate sensors), etc. that perform functions within the process plant such as opening or closing valves and measuring process parameters. The process controller receives signals indicative of the process measurements made by the field devices and/or other information pertaining to the field devices via an input/output (I/O) device, using this information to implement a control routine and then generates control signals which are sent over the buses or other communication links, such as wired or wireless channels via the input/output device to the field devices to control the operation of the process. The process controller, which is typically located within the plant environment, receives signals indicative of process measurements made by the field devices and/or other information pertaining to the field devices and executes a controller application that runs, for example, different control modules which make process control decisions, generate control signals based on the received information, and coordinate with the control modules or blocks being performed in the field devices. The control modules in the controller send control signals over the communication links to the field devices to thereby control the operation of at least a portion of the process plant or system, e.g., to control at least a portion of one or more industrial processes running or executing within the process plant. For example, the controllers and the field devices control at least a portion of a process being controlled by the process plant or system. I/O devices, which are also typically located within the plant environment, typically are disposed between a controller and one or more field devices, and enable communications there between, e.g., by converting electrical signals into digital values and vice versa. As utilized herein, field devices, controllers, and I/O devices are generally referred to as "process control devices," and are generally located, disposed, or installed in a field environment of a process control system or plant.

Currently known field devices operate within a network node that use various known Ethernet network protocols, such as for example IEC-61850, Ethernet/IP, or MODBUS/TCP networks. The controller connects to a network node using a physical gateway device. The gateway device acts as an interface between the network node and the controller. The controller communicating with the gateway, wherein a gateway application controls field devices of the node and to implement control logic controlling the field devices in the node. Since each node, may operate under a different Ethernet protocol one of the main functions of the gateway application is translation of communication from the Ethernet protocol used by the node to another Ethernet protocol used by the process control system. Although protocol translation is the primary function of the gateway the gateway may have other additional benefits such as for example allowing the physical separation of the two or more networks nodes providing an additional layer of network security and allowing connectivity of two different physical network nodes such as for example a star network or a ring network.

Currently, the physical gateway device is limited by the memory and computing power of its included hardware and as result, the ability to scale out and scale up when needed. Additionally, access to a fixed data set (point count through a network gateway) due to this memory and computing constraint results in complex implementations and networking in situations where a significant increase in point access is needed.

Virtualizing a network gateway solution by separating the gateway applications from the gateway device would help mitigate the limitations of the device. Virtualizing provides a higher memory and computing ability allowing gateway applications to be scaled out and scaled up in an easy manner and an ability to have multiple disparate downlink networks.

### SUMMARY

The disclosure relates to a virtualized network gateway for an industrial process control system.

In a first embodiment a gateway system is disclosed for an industrial process control system. The industrial process control system having at least one controller connected to a first network operating using a first communication protocol, and at least one control node connected to a second network using a second communication protocol. The gateway system comprises a network interface communicatively connected to the second network and to a local area network connected to the first network and a gateway located remote from the network interface communicatively connected to the local area network. The gateway is arranged to convert supervisory control and data received from the controller to the second communication protocol for transmission of the converted supervisory control and data over the local aera network to the network interface. The gateway is further arranged to convert information and data received from the control node and the network interface in the second protocol on the local area network to the first communication protocol coupling the converted information and data to the controller on the first network.

A second embodiment discloses a method for a gateway used in an industrial process control system. The industrial process control system having at least one controller connected to a first network operating using a first communication protocol and at least one control node connected to a second network using a second communication protocol. The method comprises coupling a network interface to the second network and to a local area network coupled to the first network and converting supervisory control and data received from the controller in the first communication protocol to the second communication protocol and coupling the converted supervisory control and data over the local area network to the network interface and the second network to the control node. The method further includes converting information and data received in the second communication protocol on the local area network from the network interface and the control node to the first communication protocol and coupling the converted data and information to the first network and the controller.

A third embodiment discloses a communication system for an industrial process control system. The industrial process control system having at least first and second hierarchical control layers and at least one controller connected to a first network operating using a first communication protocol located on the first control layer, and at least one control node connected to a second network that operates using a second communication protocol and which is located on the first control layer. The communication system comprising a network interface located on the first control layer communicatively connected to the second network and to a local area network connected to the first network and a virtual gateway located on the second control layer, the virtual gateway communicatively connected to the local area network and arranged to convert communication traffic received from the controller in the first communication protocol to the second communication protocol for transmission of the converted communication traffic over the local area network to the network interface and the second network. The virtual gateway is further arranged and to convert communication traffic received from the network interface and the control node in the second communication protocol to the first communication protocol coupling the converted communication traffic to the controller on the first network.

### BRIEF DESCRIPTION OF THE DRAWINGS

FIG. 1 illustrates an example industrial process control system according to this disclosure;
FIG. 2 illustrates an example control group consisting of system controllers communicating to gateways of network nodes according to this disclosure;
FIG. 3 illustrates an example control architecture that separates gateway applications from the gateway hardware according to this disclosure;
FIG. 4 illustrates the control network module of the gateway hardware according to this disclosure;
FIG. 5 illustrates the virtual gateway; and
FIG. 6 illustrates port configuration assignments in the control network module that provide alternate hosting for the gateway applications according to this disclosure.

### DETAILED DESCRIPTION

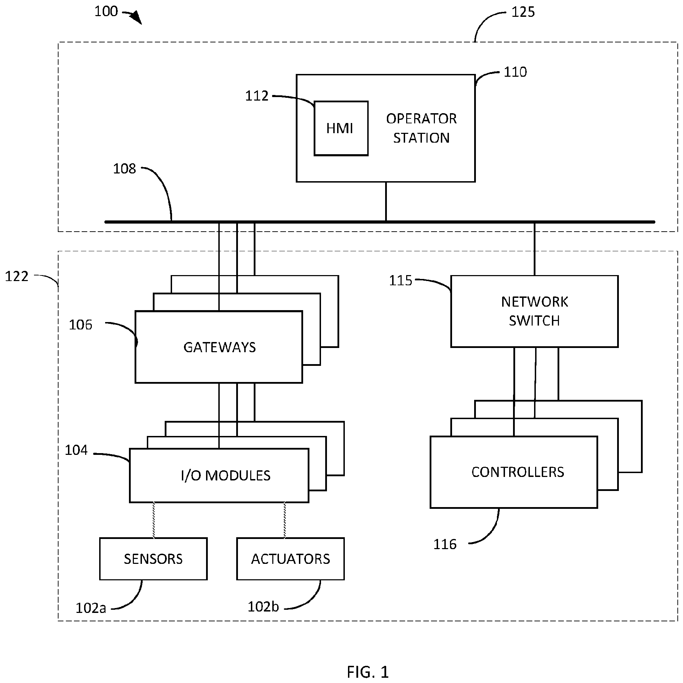

FIG. 1 illustrates a portion of an example industrial process control system 100 according to this disclosure. As shown in FIG. 1, the industrial process control system 100 includes various components that facilitate production or processing of at least one product or other material. For instance, system 100 can be used to facilitate control or monitoring of components in one or multiple industrial plants. Each plant represents one or more processing facilities (or one or more portions thereof), such as one or more manufacturing facilities for producing at least one product or other material. In general, each plant may implement one or more industrial processes and can individually or collectively be referred to as a process system. A process system generally represents any system or portion thereof configured to process one or more products or other materials or energy in different forms in some manner.

In the example shown in FIG. 1, system 100 includes one or more field devices comprising, for example, sensors 102a and actuators 102b. The field devices represent components in a process control system that may perform any of a wide variety of functions. For example, sensors 102a could measure a wide variety of characteristics in the process system, such as temperature, pressure, or flow rate. Also, actuators 102b could alter a wide variety of characteristics in the process system. Each of the sensors 102a includes any suitable structure for measuring one or more characteristics in a process system. Each of the actuators 102b includes any suitable structure for operating on or affecting one or more conditions in the process control system.

At least one input/output (I/O) module 104 is coupled to the sensors 102a and actuators 102b. The I/O modules 104 facilitate interaction with the sensors 102a, actuators 102b, or other field devices. For example, an I/O module 104 could be used to receive one or more analog inputs (AIs), digital inputs (DIs), digital input sequences of events (DISOEs), or pulse accumulator inputs (PIs) or to provide one or more analog outputs (AOs) or digital outputs (DOs). Each I/O module 104 includes any suitable structure(s) for receiving one or more input signals from or providing one or more output signals to one or more field devices. Depending on the implementation, I/O module 104 could include fixed number(s) and type(s) of inputs or outputs or reconfigurable inputs or outputs. In the exemplary system of FIG. 1, the I/O modules are connected to gateways 106 via a communication network 108. Gateways 106 receive supervisory control information from remotely located controllers 116. Gateways 106 serve as an entry and exit point for a network node. Control information and data must pass through or communicate with gateway 106 prior to being routed to or from the node. For example, control information from controllers 116 can be sent to the actuators 102b from controllers 116 through one or more gateways 106. Data from sensors 102a is communicated to one or more controllers 116 through one or more gateways 106.

For example, a first set of controllers 116 may use measurements from one or more sensors 102a to control the operation of one or more actuators 102b. These controllers 116 could interact with the sensors 102a, actuators 102b, and other field devices via the I/O module(s) 104. The controllers 116 may be coupled to the I/O module(s) 104 via Ethernet, backplane communications, serial communications, or the like. A second set of controllers 116 could be used to optimize the control logic or other operations performed by the first set of controllers. A third set of controllers 116 could be used to perform additional functions.

Controllers 116 can be used in the process control system 100 to perform various functions to control one or more industrial processes. For example, a first set of controllers 116, that operate as a first network node may use measurements from one or more sensors 102b sent from gateways 106 operating as a second and separated network node to control the operation of one or more actuators 102b. These controllers 116 could interact with sensors 102a, actuators 102b, and other field devices via the gateways 106 and I/O module(s) 104. Additionally, controllers 116 can also communicate to sensors and actuators (not shown) that can be connected to I/O modules 104 in the first network node. The controllers 116 may be coupled to the I/O module(s) 104 via Ethernet, backplane communications, serial communications, or the like. A second set of controllers 116 could be used to optimize the control logic or other operations performed by the first set of controllers. A third set of controllers 116 could be used to perform additional functions.

Controllers 116 are often arranged hierarchically in a system. For example, different controllers 116 could be used to control individual actuators, collections of actuators forming machines, collections of machines forming units, collections of units forming plants, and collections of plants forming an enterprise, either directly connected in their network node or to a different network node via a gateway 106. A particular example of a hierarchical arrangement of controllers 116 is defined as the "Purdue" model of process control. The controllers 116 in different hierarchical levels can communicate via one or more communication networks 108 and associated switches, firewalls, and other components.

Each controller 116 includes any suitable structure for controlling one or more aspects of an industrial process. At least some of the controllers 116 could, for example, represent proportional-integral-derivative (PID) controllers or multivariable controllers, such as Robust Multivariable Predictive Control Technology (RMPCT) controllers or other types of controllers implementing model predictive control (MPC) or other advanced predictive control.

As a particular example, each controller 116 could represent a computing device running a real-time operating system, a MICROSOFT WINDOWS operating system, or another operating system. Operator access to and interaction with the controllers 116 and other components of the process control system 100 can occur via various operator stations 110. Each operator station may include a human machine interface (HMI) 112 application executing on the operator station 110 and used to provide information to an operator and receive information from an operator. For example, using the HMI 112 each operator station 110 could provide information identifying a current state of an industrial process to an operator, such as values of various process variables and warnings, alarms, or other states associated with the industrial process. Each operator station 110 could also receive information affecting how the industrial process is controlled, such as by receiving setpoints for process variables controlled by the controllers 116 or other information that alters or affects how the controllers 116 control the industrial process.

Each operator station 110 includes any suitable structure for displaying information to and interacting with an operator, such as display or keyboard or pointing devices such as a mouse. Also, operator station 110 could include one or more processing devices and one or more memories for storing instructions and data used, generated, or collected by sensors 102a and actuators 102b. The operator stations could also include at least one network interface, such as one or more Ethernet interfaces and or Ethernet switches.

At least one network switch 115 couples the controllers 116 to a communication network 108. The network switch 115 may transport control signals and data to and from the controllers 116 to gateways 106 and operator station 110 using communication network 108. The network switch 115 may also include a firewall providing security between the control nodes connected to gateways 106. The switch 115 may also block traffic to and from another communication network that may be connected to communication network 108 of system 100. Communication network 108 could represent any suitable Ethernet network, using an Ethernet protocol such as IEC 61850 or Fault Tolerant Ethernet (FTE) from HONEYWELL INTERNATIONAL INC. The communication network 108 is arranged to transport supervisory control and data between the controllers 116 and the gateways 106, thereby allowing controllers 116 to access and control the sensors 102a and actuators 102b of the control nodes.

Further, it is noted that the industrial process control system 100 of FIG. 1 includes a field control layer (e.g., "the process plant floor 122") and a back-end control layer 125 which are communicatively connected by communication network 108. As shown in FIG. 1, field control layer 122 includes physical components (e.g., process control devices, networks, network elements, etc.) that are disposed, installed, and interconnected therein to operate to control the process during run-time. For example, controllers 116, gateways 106, network switch 115, I/ O modules 104 and field devices 102*a-b,* located, disposed, or otherwise are included in the field control layer 122. In the field control layer 122 of the industrial plant, raw materials are received and processed using the physical components disposed therein to generate one or more products.

The back-end control layer 125 of the industrial plant includes various components such as computing devices, operator workstations, historians, access points along databases or databanks, etc. that are shielded and/or protected from the harsh conditions and materials of the field control layer 122. Referring to FIG. 1, the back-end control layer 125 includes, for example, the operator workstations 110 and/or may include other centralized administrative systems, computing devices, and/or functionality that support the run-time operations of the system 100. In some configurations, various computing devices, databases, and other components and equipment included in the back-end control layer 125 of the industrial plant may be located at different physical locations, some of which may be local to the industrial plant hosting system 100, and some of which may be remote.

This represents a brief description of one type of process control system that may be used to manufacture or process one or more materials. Additional details regarding industrial process control and automation systems are well-known in the art and are not needed for an understanding of this disclosure. Also, industrial process control and automation systems are highly configurable and can be configured in any suitable manner according to any particular need.

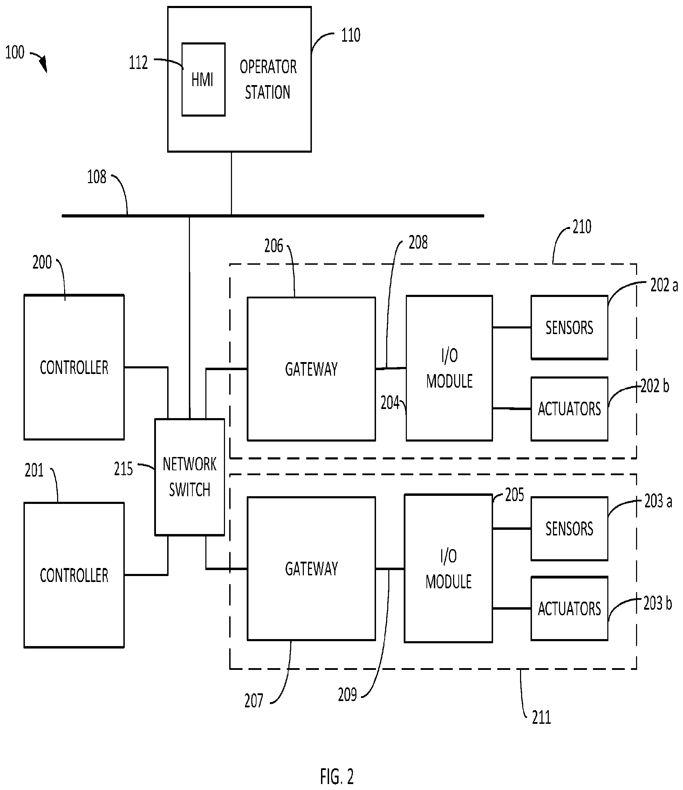

FIG. 2 illustrates an example of the control architecture of system 100 communicating using a first Ethernet protocol to at least a first 210 and second 211 control node operating using a second Ethernet protocol. For ease of explanation, the control nodes 210, 211 are described as being used in the industrial process control system 100 of FIG. 1. However, the control nodes 210, 211 could be used in any other suitable system. In the example, of FIG. 2, the control nodes 210, 211 operate at Level 1 of the Purdue model, and among other things, the example control nodes 210, 211 may use the measurements from the one or more sensors 202a, 203a to control the operation of one or more actuators 202b, 203b.

As shown in FIG. 2, the control nodes 210, 211 are connected to controllers 200, 201 via a network switch 215. Gateways 206, 207 of each control node 210, 211 connect through network switch 215 to controllers 200, 201, and the operator station 110 via communication network 108. The controllers 200, 201 may represent, or be represented by, various ones of the controllers 116 of FIG. 1. Gateways 206, 207 may represent, or be represented by, various ones of gateways 106 of FIG. 1. In exemplary system 100 communication network 108 operates using either an FTE or an IEC-61850 Ethernet protocol. Network switch 215, which in this exemplary configuration is an Ethernet network switch device, is arranged to distribute the supervisory control and data on system communication network 108 between the controllers 200, 201 the gateways 206, 207 and the operator station 110. Controller 200, individually or collectively with controller 201, could communicate with gateway 206 and via I/O module 204 with sensors 202a and implement control logic for controlling the actuators 202b within control node 210. Controller 200, individually or collectively with controller 201 could also communicate with gateway 206 of control node 210 and I/O module 204 with sensors 202a and implement control logic for controlling the actuators 203b within the network node 211 via gateway 207 and I/O module 205.

The control nodes 210, 211 may be configured to operate using Ethernet protocols that are dissimilar with the Ethernet protocol used by the communication network 108. For example, control node 210 may use sensors 202a and actuators 202b, or other field devices that communicate on an Ethernet wired network 208 using a PROFINET Ethernet protocol. Control node 211 may use sensors 203a and actuators 203b, or other field devices that communicate on an Ethernet wired network 209 using a MODBUS/TCP Ethernet protocol. One of the tasks of gateways 206, 207 is to convert the Ethernet protocol from a first Ethernet protocol to a second Ethernet protocol. For example, supervisory control and data from controllers 200, 201 may be transmitted along communication network 108 using the first Ethernet protocol, i.e., FTE protocol. However, each control node 210, 211 may include sensor and actuators or other field devices that operate using a desperate Ethernet protocol, such as the PROFINET and MODBUS/TCP protocol.

Each gateway 206, 207, may include an application executing in each gateway 206, 207 that translates received supervisory control and data of a first Ethernet protocol from system communication network 108 to a second Ethernet protocol used by the devices connected to the control node. The translated supervisory control and data is transmitted in the second Ethernet protocol to the I/O module for distribution to the actuators of the control nodes 210, 211. In the example of FIG.2, the gateway 206 of control node 210 executes its translation application to convert the received supervisory control and data from an FTE protocol to the PROFINET protocol for distribution to actuators 202b of control node 210 operating using the PROFINET protocol. For control node 211, the received supervisory control and data may be converted by the translation application in gateway 207 from FTE to MODBUS/TCP. Data from the sensors 202a, 203a of each control node 200, 211 is translated by the control nodes respective gateway 206, 207 from the second communication protocol to the first communication protocol of communication network 108.

In some embodiments the control nodes 210, 211 may be arranged in Ethernet interconnection topologies. Suitable topologies include, but are not limited to, a ring topology and a star topology. The ring topology comprises an interconnection of the controllers wherein each controller is in communication with two other controllers. A star topology is wherein one or more controllers are interconnected with the remaining controllers.

Large Ethernet deployments can require a substantial number of managed Ethernet switch and gateway configuration in order to interconnect a large number of control nodes operating using communication networks using different Ethernet protocols particularly in systems employing Fault Tolerant Ethernet (FTE) redundant network configurations. The gateway and control node architecture just described in FIG. 2 is limited by the memory and the computing capabilities of the hardware of the gateway and as result, the ability to scale out and scale up a gateway control node when needed. Additionally, due to the memory and processor constraints, access to a fixed data set (point count through a network gateway) results in complex networking implementations where a significant increase in point access may be needed.

In the present disclosure a system architecture separates the gateway applications from gateway hardware and executes the gateway Ethernet translation applications in a virtual computing environment. Virtualizing provides a higher memory and compute ability allowing gateway applications to be scaled out and scaled up easily. Furthermore, virtualizing the gateway applications reduces cabling need with an ability to have multiple disparate downlink networks. However, virtualizing alone does not cover all benefits provided by a physical gateway especially the disparate network topologies (ring and star) and a clean separation point of responsibilities for groups managing the two disparate networks.

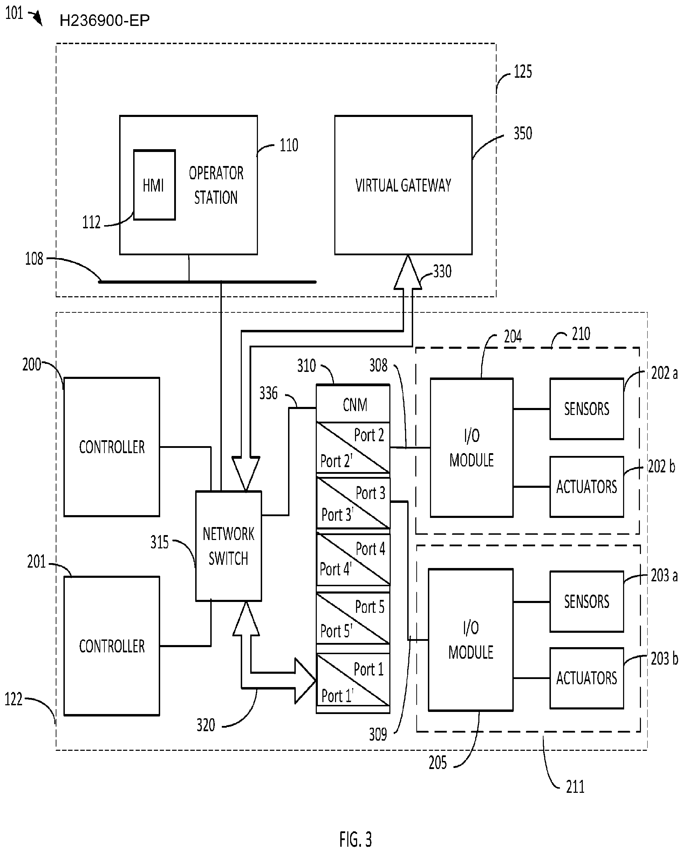

FIG. 3 schematically illustrates an example control system architecture 101 that separates the gateway applications from the gateway hardware. A configurable network interface such as for example a control network module (CNM) 310 is used as the physical hardware component between the control nodes 210, 211, and the controllers 200, 201. CNM 310 is located in field control layer 122. The CNM 310 includes a first outlet port 1 that serves as the uplink communication port between the CNM 310 and the system network 108 of the system 101. Ports 2-5 provide downlink ports to the networks used by the control nodes. In the example of FIG. 3, port 2 of the CNM 310 communicatively connects the CNM 310 to network 308 and control node 210. Port 3 communicatively connects the CNM 310 to network 309 and control node 211. Communication traffic to system 101 is transmitted from the CNM 310 from port 1 using a bi-directional Ethernet communication cable 320. The communication cable 320 is operated to provide multiple different classes of communication channels or links between the CNM 310 and the system 101. For example, cable 320 may use a virtual local area network (VLAN) to communicate multiple different classes of communication traffic on separate channels or links on the communication cable 320 from the network nodes 210, 211. Each class of communication traffic on a VLAN is assigned to handle traffic from a downlink port of a control node. It will be appreciated that other forms of traffic segregation may be used to provide the separate classes of communication traffic on cable 320 and therefore is not limited to only VLAN.

A network switch 315 connects the CNM 310, controllers 200, 201 of field control layer 122 to a virtual gateway 350. The virtual gateway 350 is located in the back-end control layer 125. The virtual gateway 350 hosts gateway applications that provide the Ethernet protocol translation for the control nodes 210, 211 connected to the CNM 310. The virtual gateway 350 may use one or more translation applications running on a virtual machine (VM) hosting environment. The VM executes the disparate gateway translation applications for the Ethernet protocols of the control nodes connected to the CNM 310. For example, a translation application executed in virtual gateway 350 converts the FTE protocol used by communication network 108 to a PROFINET protocol used by the devices of control node 210. The VM would also host the translation applications to convert the FTE protocol of communication network 108 to the MODBUS/TCP protocol that may be used by control node 211. The virtual gateway 350 is connected to network switch 315 using a bi-directional communication cable 330 that is configured to carry multiple communication traffic channels as was explained above for the uplink cable 320.

The CNM 310 may be configured as a pair of modules that operate as a redundant pair. Redundant pairing is typically used in a process control system to provide a working copy of a module in case of a failure of one of the modules. One of the redundant modules assumes a primary role and the other a secondary role. The secondary module operates in a standby mode ready to switch over to a primary role if the primary module fails. For the ease of explanation, the CNM 310 of FIG. 3 is shown only with ports 1- 5 having ports 1' -5' as redundant, however, the CNM 310 may be comprised of two physically separated modules 310, each having the same ports connected to the uplink communication channel 320 and to the downlink communication channels 308, 309.

The CNM 310 provides routing of the translated Ethernet supervisory control and data made in the virtual gateway 350 to the connected control nodes 210, 211. The virtual gateway 350 translates received Ethernet first protocol supervisory control and data from communication network 108 to an Ethernet second protocol used by the sensors and actuators of the control nodes 210, 211. The virtual gateway 350 transmits the converted (e.g., translated) supervisory control and data to the CNM 310 via a VLAN channel on cable 330 and network switch 315 and from the network switch 315 to a an associated VLAN channel on communication cable 320 to the uplink port 1 of the CNM 310. The CNM 310 then routes the received converted second protocol supervisory control and data to a downlink port 2, 3. The supervisory control and data is sent via second networks 308, 309 coupled to CNM 310 ports 2, 3 to the I/O module 204, 205 associated with control nodes 210, 211. The I/O modules 204, 205 distributing the supervisory control and data to actuators 202b, 203b of respective control nodes 210, 211.

The virtual gateway 350 executes translation gateway applications bidirectionally to convert received supervisory control and data in the first Ethernet protocol used by devices connected to the communication network 108 (e.g. controllers 200, 201 and operator station 110) to the second Ethernet protocol used by the devices of control nodes 210, 211 and from the second Ethernet protocol used by each control node 201, 211 to the first Ethernet protocol of the communication network 108. Information and data from the sensors 202a and 203a of each control node 210, 211 is routed from port 1 of CNM 310 via an uplink VLAN channel of communication cable 320 to network switch 315. The second protocol information and data is coupled from network switch 315 via network cable 330 and an uplink VLAN channel to the virtual gateway 350 where the appropriate gateway translation program translates the second Ethernet protocol from control nodes 210, 211 to the first communication protocol and coupled to communication network 108 through network switch 315 for use by the controllers 200, 201 and operator station 110.

Each control node 210, 211 may each be connected to an Ethernet network using the same second Ethernet protocol or to two different Ethernet protocols. For example, control node 210 may connect to devices that operate using a Profibus protocol and the control node 211 connected to devices that operate using another Ethernet protocol (e.g., MODBUS/TCP). The virtual gateway 350 is capable of translating and converting the Ethernet protocol used by communication network 108 to the Ethernet protocols used by each control node 210, 211.

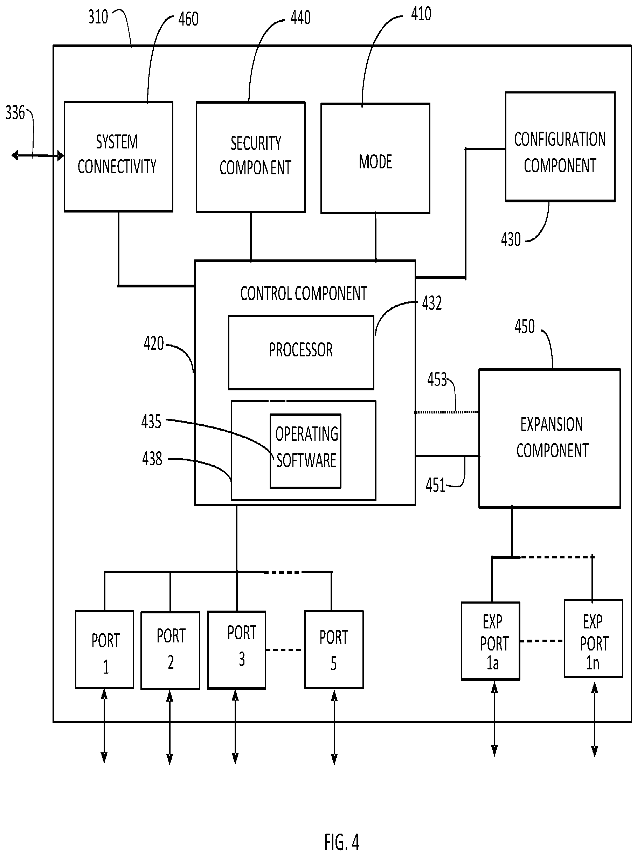

FIG. 4 illustrates schematically the components of CNM 310. The CNM 310 includes a mode component 410, a control component 420, a configuration component 430, a security component 440, an expansion component 450 connected to a plurality of expansion ports 1a-n, a system connectivity component 460 and a plurality of I/O ports 1-5.

The mode component 410 allows a user to select and implement stored pre-programmed deployment functions of the software that operates the functions of the CNM 310, such as for example, security policy and firewalls, virtual LAN (VLAN), and/or quality of service (QoS) networking.

The control component 420 includes a processor 432 and a memory 438. The processor 432 is responsible for executing the necessary function based on the mode component 410 selection made by a user via configuration component 430. The processor 432 executes operating software 435 stored in memory 438 that runs the programmed functions of the CNM 310.

The CNM 310 can also be programmed to execute customized network functions when used in conjunction with the configuration component 430. The configuration component 430 is comprised of configurable hardware and software that enables specialized custom port configurations to perform specialized network functions. The configuration component 430 provides an independent interface to the control component 420 to allow fast configuration and secure bootstrapping. For example, the configuration component 430 may include a Bluetooth or other wireless communication hardware module operating a two-way wireless software protocol for establishing two-way communication between the CNM 310 and a remotely located handheld device (not shown), such as a smartphone, a tablet, or a laptop PC. A user using the handheld device can directly query port configuration settings of the ports 1-5 and expansion ports 1a and 1n and set custom port settings such as for example, port speed, switched port analyzer (SPAN) and VLAN configurations. The configuration component may also receive the customized port configurations from the system connectivity component 460 or from management traffic sent on the cable 320 to port 1 from a controller 200, 201 or the operator station 110.

The security component 440 includes both hardware and software applications providing one or more security attributes such as, for example, hardware authentication, firewalls, secure boot, signed firmware and deep packet inspection. The security component 440 is responsible for ensuring authentication when the other components of the network module are connected to exterior sources. For example, the security component would provide a proper security authentication to external handheld devices connected or attempting to connect to the configuration module 430. Additionally, the security component monitors Ports 1-5 and expansion ports 1*a-n* to detect any changes at the ports. The security component 440 notifies the control component upon detection of an irregular condition. The control component may then send status messages to a supervising controller, or the operator station 110 through the system connectivity module 460 and network connection 336 of the detected irregular condition.

The expansion component 450 is a hardware Ethernet switch that provides a mechanism to horizontally scale and expand the port connections of the CNM 310. Control information and data to and from controllers 200, 201 are connected to the expansion component 450 via expansion ports 1*a-n* using a mix of copper or fiber cables, employing wired or wireless Ethernet or serial network protocols. A software defined internal network between the expansion component and expansion component separates data and control connections to a data plane connection 451 and a control plane connection 453. The control plane connection 453 is used to pass firmware updates, configuration data, such as for example port speed, SPAN and VLAN to the expansion component and expansion ports 1a-n.

Port 1 of the CNM 310 in the present embodiment is used as the uplink port for connecting the CNM 310 to communication network 108 of system 101 and the virtual gateway 350. The I/O modules 204, 205 of control nodes 210, 211 are connected to ports 2 and 3 via downlink communication paths 308, 309.

The system connectivity port 460 provides a communication channel via communication path 336 to provide notifications to the HMI 114 and the operator station 110 of the status and or changes to the CNM 310. This may include for example, cable breaks or reconnects new device connections and disconnections, and any changes in port speed.

The CNM 310 described above and shown in FIG. 4 can be configured as a single I/O termination assembly (IOTA) module or interconnected with another control network module 310 via a backplane of an equipment cabinet or frame to provide an active system IOTA that can easily interconnect to multiple I/O modules 204, 205 and controllers 200, 201.

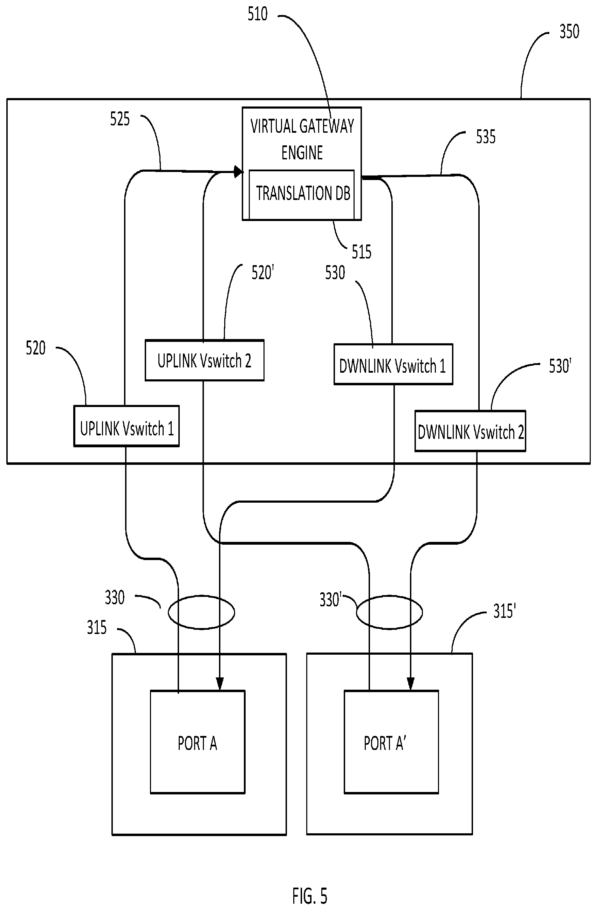

FIG. 5 illustrates schematically an example of virtual gateway 350. The virtual gateway 350 includes a virtual gateway engine 510, a first virtual uplink switch 520 and a redundant second virtual uplink switch 520' and a first downlink virtual switch 530 and a redundant second downlink virtual switch 530'. A supervisory VLAN network 525 communicatively connects Vswitches 520, 520' to the virtual gateway engine 510. A downlink VLAN 535 communicatively connects the virtual gateway engine 510 to virtual downlinks Vswitches 530, 530.

The components of the virtual gateway executes within in an enterprise-class, type-1 hypervisor, such as for example, an ESXi server developed by the VMWARE LLC. The type-1 hypervisor, is not a software application installed on an operating system. Instead, the hyperserver includes and integrates its own OS components. The hyperserver runs on bare metal (without running an operating system) and includes its own kernel. The hyperserver kernel handles CPU and memory directly, using scan-before-execution (SBE) to handle special or privileged CPU instructions and a SRAT (system resource allocation table) to track allocated memory.

Supervisory VLAN 525 provides multiple uplink VLAN channels from a primary port A of network switch 315 and multiple VLAN channel on secondary port A' of a secondary copy of the network switch 315'. For example, primary bi-directional communication cable 330 connects the network switch 315 to the virtual gateway 350 and a secondary bi-directional communication cable 330' connects the secondary network switch 315' to the virtual gateway 350. The uplink VLAN channels connect through two independent virtual Ethernet switches 520, 520'. The downlink VLAN channels 535 connect through two independent downlink virtual switches, 530, 530'. Both the supervisory VLAN 525 and downlink I/O VLAN 535 share a bi-directional communication channel on the primary Ethernet network cable 330 and the secondary Ethernet network cable 330'.

The virtual gateway engine 510 has access to a translation database 515 used in translating between the disparate second Ethernet protocols used by the control nodes 210, 211 and the first Ethernet network protocol used by the system 101. For example, from a first protocol such as an FTE Ethernet protocol to a second protocol such as a PROFIBUS protocol. The virtual gateway engine 510 executes a translation application that uses data from the translation DB 515 to convert supervisory control and data traffic transmitted on the supervisory VLAN 525 and received on the primary and secondary Ethernet network cables 330, 330' from network switches 315, 315'. Supervisory control and data of a first protocol may originate from controllers 200, 201 or from the operator station 110.

The translated second protocol supervisory control and data traffic is output on downlink VLAN 535 to the downlink switches 530, 530' and bi-directional communication cable 330, 330' to network switches 315, 315' via downlink VLAN channels 535. Cable 330, 330' carries both uplink channels 525 and downlink channels 535. The converted second Ethernet protocol is transmitted to CNM 310 over the downlink channel of bi-directional communication cable 320. The CNM 310 routes the received control information and data to either CNM 310 ports 2 or 3 for transmission via downlink communication path 308, 309 to control nodes 210, 211. For example, the control information and data in the second protocol would be forwarded to control node 210 from port 2 of CNM 310 and the downlink communication path 308 to I/O module 204 and to control actuator 202a.

The virtual gateway engine 510 can also translate sensor data of a second protocol from a control node to the first protocol used by the controllers and HMI 112 of system 101. Sensor data from sensors 202a, 203a is transmitted to the CNM 310 via their respective downlink communication path 308, 309 from I/O module 204, 205 to their associated CNM port 2 or 3. The sensor data traffic received by the CNM 310 from control nodes 210, 211 is communicatively coupled to network switch 315, via an uplink VLAN channel of bi-directional communication cable 320. The uploaded sensor data traffic is next transmitted via the uplink VLAN channel 525 of bi-directional communication cable 330 to the virtual gateway engine 510. The virtual gateway engine 510 receives the sensor data in the second protocol and translates the sensor data into the first protocol. The translated sensor data is next transmitted via the downlink VLAN channel 535 to network switch 315 and to communication network 108 and controllers 200, 201 and/or the operator station 110 for display or further analysis by an operator.

The architecture of system 101 that separates the gateway applications from gateway hardware solution could also be used with alternative forms of hosting such as a bare metal computer, a control HIVE (highly integrated virtual environment), and other forms of embedded CEP (complex event processing) hardware hosts. This is done via the clear separation between the virtual gateway application hosting and the physical network interface of the CNM. The lower control level, i.e., the Purdue level 1, where the CNM operates could be a consistent solution for various subsystem network connection topologies that are independent from the upper control level of the virtual application hosting by the GIM.

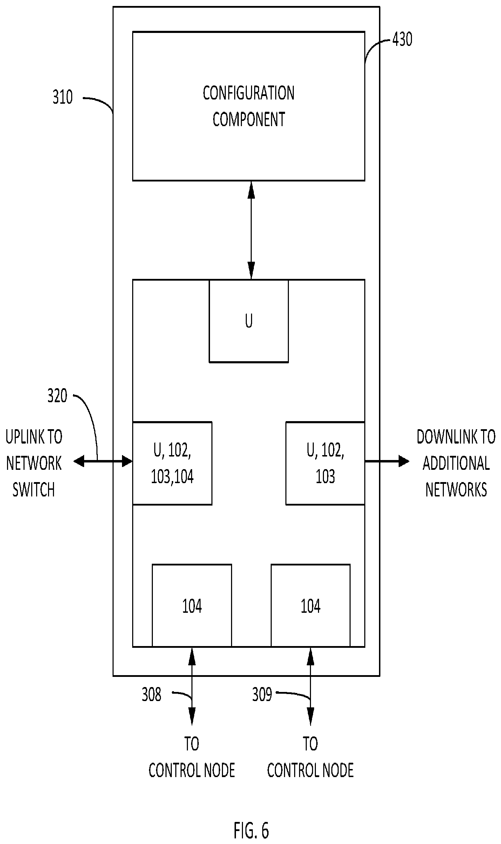

FIG. 6 illustrates port configuration assignments in the CNM 310 managed by the CNM control component 420. Each VLAN channel carrying communication traffic on cable 320 includes a port configuration identification designator (ID). The IDs are identified in this example as U (untagged), 102, 103 and 104. The control component 420 of CNM 310 is configured to identify the VLAN channels transmitted to the CNM 310 to port 1 by uplink cable 320. Each VLAN channel transmitted on cable 320 includes an ID identifier described in Table 1 below.

**Table 1**

| VLAN ID | VLAN description |
|---|---|
| U | This VLAN ID carries untagged traffic which is primarily used on supervisory VLAN |
| 102, 103 | This VLAN ID carries I/O traffic and management traffic that may use additional and other downlink interfaces (ports 4 and 5) |
| 104 | This VLAN ID carries second protocol I/O traffic |

VLAN U (untagged), traffic is normal supervisory control and data traffic that will flow across all ports of the CNM 310 except for the ports (e.g., ports 2, 3) connected to the second network 308, 309. VLAN ID U may also be used to designate communication traffic sent to communication network 108 and the virtual gateway 350 from the CNM 310. VLAN ID 102 and 103 traffic carries I/O and management traffic that may use other ports on the CNM 310, such as for example ports 4 and 5. These ports may be connected to other networks such as wireless networks, using various wireless protocols. The VLAN ID 104 provides access to the second networks 308, 309 and the second communication protocol connected to control nodes 210, 211. VLAN 104 traffic is the supervisory control and data translated from the first Ethernet protocol of communication network 108 to the second protocol of the control nodes 210, 211. The ID configurations provide for the interconnection of ports 2-5 to achieve segregation between the ports of the CNM.

The configuration component 430 in the CNM 310 retrieves VLAN ID information sent to the CNM 310 from communication network 108, by uplink port 1. The configuration component 430 would configure the CNM 310 to perform the customized network functions described above. Providing custom port configurations to perform specialized network functions. Control component 420 would apply the custom configuration to the downlink ports during CNMs normal bootup.

It may be advantageous to set forth definitions of certain words and phrases used throughout this patent document. The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims is intended to invoke 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," or "controller" within a claim is understood and intended to refer to structures known to those skilled in the relevant art, as further modified or enhanced by the features of the claims themselves and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A gateway system for an industrial process control system having at least one controller connected to a first network (108) operating using a first communication protocol, and at least one control node (210, 211) connected to a second network (308, 309) using a second communication protocol the gateway system comprising:
a control network module (CNM) (310) communicatively connected to the second network (308, 309) and to a local area network connected to the first network (108); and
a gateway (350) located remote from the CNM (310) communicatively connected to the local area network and arranged to convert supervisory control and data received from the controller to the second communication protocol for transmission of the converted supervisory control and data over the local aera network to the CNM (310), and to convert information and data received from the control node (210, 211) and the CNM (310) in the second protocol on the local area network to the first communication protocol coupling the converted information and data to the controller on the first network (108).

2. The gateway system of claim 1 wherein, local area network is at least one virtual local area network (VLAN) hosted on a bi-directional communication cable (320, 330) connected between the CNM (310) and the gateway (350) through a network switch (315), wherein the first network (108) is communicatively connected to the VLAN through the network switch (315).

3. The gateway system of claim 2 wherein, the CNM (310) includes:
a first port (PORT 1) connected to the cable (320) and to the VLAN; and
at least a second port (PORT 2) connected to the second network (308) and the control node (210),
wherein the VLAN is communicatively connected to the second port.

4. The gateway system of claim 3 wherein, the gateway (350) is a gateway application executing in a virtual machine (VM) hosting environment of an enterprise integration manager (EIM) (510) that includes a network protocol translation database (515) the EIM communicatively connected to the cable (330) and the VLAN, wherein responsive to the supervisory control and data coupled to the EIM by the VLAN the gateway application uses the translation database to convert the supervisory control and data from the first protocol to the second protocol and downlink the converted supervisory control and data on a VLAN of cable (330) to the first port of the CNM (310).

5. The gateway system of claim 3 wherein, information and data in the second protocol sent from the first port of the CNM (310) on the VLAN is uplinked to the EIM (510) of the virtual gateway (350) via the network switch (315), wherein the gateway application uses the translation database (515) to convert the information and data from the second protocol to the first protocol and downlink the converted information and data on a VLAN of cable (330) to the network switch (315) and the first network (108).

6. The gateway system of claim 1 wherein the first network (108) is an Ethernet network, and the first protocol is a fault tolerant ethernet protocol (FTE), or alternately an IEC-61850 Ethernet protocol.

7. The gateway system of claim 1 wherein, the second network (308, 309) is an Ethemet network operating using a PROFINET Ethernet protocol, or alternately a MODBUS/TCP Ethernet protocol.

8. A method used in an industrial process control system the system having at least one controller connected to a first network (108) operating using a first communication protocol and at least one control node (210, 211) connected to a second network (308, 309) using a second communication protocol comprising:
coupling a control network module (CNM) (310) to the second network and to a local area network coupled to the first network (108);
converting supervisory control and data received from the controller in the first communication protocol to the second communication protocol and coupling the converted supervisory control and data over the local area network to the CNM (310) and the second network (308, 309) to the control node (210, 211), and
converting information and data received in the second communication protocol on the local area network from the CNM (310) and the control node (210, 211) to the first communication protocol and coupling the converted data and information to the first network (108) and the controller.

9. The method of claim 8 wherein, the step of coupling a CNM comprises;
connecting a bi-directional Ethernet communication cable (320, 330) that hosts the local area network between the CNM (310) and a gateway (350) through a network switch (315); and
configuring the local area network to operate as at least one virtual local area network (VLAN),
wherein the first network (108) is communicatively connected to the VLAN through the network switch (315).

10. The method of claim 9 wherein the method further comprises:
providing a gateway application executing in a virtual machine (VM) hosting environment of an enterprise integration manager (EIM) (510) that includes a network protocol translation database (515), wherein the EIM (510) is communicatively connected to the cable (330) and the VLAN .

11. The method of claim 10 wherein the step of converting supervisory control and data comprises:
translating using the gateway application and the translation database the supervisory control and data in the first communication protocol from the first network (108) coupled to the EIM (510) by the VLAN to the second communication protocol and coupling the converted supervisory control and data to the cable (330) and the VLAN.

12. The method of claim 10 wherein, the CNM (310) includes a first port and at least one second port the method further comprising:
connecting the cable (320) and the VLAN to the first port; and
connecting the second network (308) and the control node (204) to the second port,
wherein the VLAN is communicatively connected to the second port and to the second network (308).

13. The method of claim 12 wherein, the step of converting information and data comprises:
translating using the gateway application and the translation database the information and data in the second communication protocol from the second network (308) coupled to the EIM (510) by the VLAN to the first communication protocol and coupling the converted information and data to the cable (330) and the VLAN to the first network (108).

14. The method of claim 10 wherein the CNM (310) includes at least a third port connected to a control node (211) operating on a third communication network (309) using a third communication protocol, and the cable (320) includes at least a second VLAN the method comprising:
translating using the gateway application and the translation database the information and data in the third communication protocol from the third network (309) coupled to the EIM by the second VLAN to the first communication protocol and coupling the converted information and data on the cable (330) to the first network (108).

15. The method of claim 14 comprising:
translating using the gateway application and the translation database the supervisory control and data in the first communication protocol from the first network and coupled to the EIM (510) to the third communication protocol, and coupling the converted supervisory control and data on the cable (330, 320) and the second VLAN to the CNM third port to the control node (211) operating on the third communication network.
